# Europäisches Patentamt
## European Patent Office
## Office européen des brevets

(19)

(11) Veröffentlichungsnummer: **0 058 147**
**B1**

(12) **EUROPÄISCHE PATENTSCHRIFT**

(45) Veröffentlichungstag der Patentschrift:
**31.07.85**

(51) Int. Cl.⁴: **F 24 F 13/10**, F 16 K 31/10, F 16 K 51/00

(21) Anmeldenummer: **82890014.2**

(22) Anmeldetag: **02.02.82**

(54) **Lochschieber, insbesondere für Luftheizungen.**

(30) Priorität: **03.02.81 AT 486/81**

(43) Veröffentlichungstag der Anmeldung:
**18.08.82 Patentblatt 82/33**

(45) Bekanntmachung des Hinweises auf die Patenterteilung:
**31.07.85 Patentblatt 85/31**

(84) Benannte Vertragsstaaten:
**BE DE FR IT**

(56) Entgegenhaltungen:
**BE - A - 682 917**
**DE - B - 1 249 489**
**DE - C - 279 874**
**DE - C - 442 291**
**FR - A - 730 634**
**US - A - 2 936 692**

(73) Patentinhaber: **ALEX. FRIEDMANN KOMMANDITGESELLSCHAFT, Am Tabor 6, A-1200 Wien (AT)**

(72) Erfinder: **Engel, Ignaz, Geistingergasse 1, A-1190 Wien (AT)**

(74) Vertreter: **Krause, Walter, Dr. Dipl.-Ing., Margaretenstrasse 21, A-1040 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf einen Lochschieber, insbesondere für Luftheizungen, welcher im wesentlichen zwei aneinanderliegende und ggf. durch Federkraft gegeneinander gepreßte gelochte Platten aufweist, die relativ zueinander über Mitnehmer mittels eines Stellantriebes verschiebbar sind.

Bei einem derartigen Lochschieber, beschrieben in der US-A-2 936 692, ergibt sich das Problem, daß er nach längerer Betriebsdauer durch die unvermeidliche Verschmutzung und Verkrustung sehr schwergängig wird. Dadurch leidet auch die feinfühlige Einstellbarkeit eines solchen Schiebers, wodurch es im Falle einer Ansteuerung durch eine automatische Regeleinrichtung zu empfindlichen Störungen kommen kann.

Es ist zwar in der DE-C-279 874 ein Lüftungsgitter beschrieben, bei dem eine feste und eine bewegliche Platte mit Öffnungen versehen sind, wobei die bewegliche Platte von einem Hebel über eine Zugkette von Hand betätigt wird. Diese Ausführung weicht jedoch vom Lochschieber der eingangs erwähnten Art grundsätzlich ab, wonach die zwei aneinanderliegenden Platten mittels eines Stellantriebs relativ zueinander verschiebbar sein sollen. Beim Schließen des Lüftungsgitters wird die beim Öffnen von der festen Platte zunächst abgehobene bewegliche Platte über einen Hebel in Richtung nach oben verschoben, bis sie in der Endstellung zufolge der Kinematik des Betätigungshebels auf der einen Seite und einer Knagge auf der anderen Seite, unter welcher die bewegliche Platte eingeschoben wird, wieder auf der festen Platte in Schließstellung aufliegt. Es wird bemerkt, daß in den Zwischenstellungen der beweglichen Platte die Löcher in der festen Platte und die Löcher in der beweglichen Platte einen erheblichen Abstand voneinander aufweisen, so daß bei dieser Einrichtung ein genau definiertes, teilweises Schließen und Öffnen der Löcher nicht möglich ist. Dies ist aber für einen Lochschieber, welcher über eine Regeleinrichtung betätigt wird, notwendig, weil andernfalls nur eine ganz grobe Auf-Zuregelung, also ohne Zwischenstellungen der beweglichen Platte, möglich ist.

Aufgabe der Erfindung ist es, einen Lochschieber der eingangs erwähnten Art vorzuschlagen, bei dem die Nachteile der beschriebenen bekannten Ausführungen vermieden sind. Insbesondere soll sichergestellt sein, daß auch in stärker verschmutztem und verkrustetem Zustand die exakte Einstellbarkeit des Lochschiebers gewahrt bleibt.

Erfindungsgemäß wird dies dadurch erreicht, daß der Stellantrieb über die Mitnehmer jeweils in einem spitzen Winkel zu einer der Platten angreift und impulsweise erregbar ist, so daß diese Platte bei jedem Impuls kurz von der anderen Platte abgehoben und dabei gleichzeitig in Verschieberichtung bewegt wird. Auf diese Weise wird erreicht, daß die vom Stellantrieb ausgeübte Kraft in einem Winkel zur Bewegungsrichtung an der verschiebbaren Platte angreift und somit eine Kraftkomponente senkrecht zur Bewegungsrichtung der verschiebbaren Platte auf diese einwirkt und von der feststehenden Platte abhebt, wodurch eine leichte Verschiebbarkeit auch bei starker Verschmutzung sichergestellt wird. Die bewegliche Platte liegt nach jedem Impuls wieder auf der feststehenden Platte auf, so daß jede beliebige Zwischenstellung und damit Teilöffnungen der Durchströmöffnungen möglich sind.

Gemäß einem weiteren Erfindungsmerkmal ist vorgesehen, daß zwei an der verschiebbaren Platte an in Verschieberichtung distanzierten Punkten angelenkte und mit dieser je einen spitzen Winkel einschließende, als Stellantrieb wirkende Betätigungselemente vorgesehen sind, die je aus einem mittels Federn vorgespannten Anker und einem zugehörigen Kern eines mittels eines Impulszuges erregbaren Elektromagneten bestehen. Dadurch ist sichergestellt, daß die auf die verschiebbare Platte einwirkende Kraft in einem Winkel zu dieser angreift und diese dabei auch von der feststehenden Platte abhebt. Bei dieser Ausführungsform ist es möglich, für die Verstellung des Lochschiebers jeweils nur einen Elektromagneten impulsweise zu erregen, so daß die verschiebbare Platte an ihrem einen Ende bei jedem Impuls kurz abgehoben und dabei gleichzeitig in eine Richtung gezogen und anschließend wieder auf die feststehende Platte gedrückt wird. Dabei unterstützt der federbelastete Anker des zweiten Elektromagneten die Verschiebung. Auf diese Weise kann die verschiebbare Platte leicht bewegt werden, wobei durch die im Rhythmus der Impulse vibrierende verschiebbare Platte allfällige Verkrustungen aufgebrochen werden und sich auch dadurch die Leichtgängigkeit verbessert.

Eine weitere Ausführungsform der Erfindung besteht darin, daß die Mitnehmer durch mindestens zwei Arme gebildet sind, die mit ihren einen Enden an der der feststehenden Platte des Lochschiebers zugekehrten Seite der verschiebbaren Platte oder eines mit dieser verbundenen Auslegers anliegen und an ihren anderen Enden schwenkbar an der senkrecht zur Bewegungsrichtung der verschiebbaren Platte und parallel zu dieser verlaufenden Achse befestigt sind, wobei in der gleichen Bewegungsrichtung der verschiebbaren Platte gesehen, der Anlagepunkt mindestens eines der Arme vor und jener bzw. jene des bzw. der übrigen Arme(s) hinter der zugeordneten Achse liegt bzw. liegen, an der bzw. denen die Arme jeweils befestigt sind. Wird in diesem Falle auf die einen Arm schwenkbar haltende Achse von einem Stellglied aus eine Kraft in Bewegungsrichtung der verschiebbaren Platte ausgeübt, so wird aufgrund der Reibung zwischen dem an der verschiebbaren Platte anliegenden Ende des einen Armes, welcher sich schräg in Richtung der Krafteinwirkung von der Achse zur Platte erstreckt, auf diesen ein Drehmoment ausgeübt, wodurch sich dieser verdreht und dabei die verschiebbare Platte von der feststehenden Platte wegdrückt. Auf diese Weise werden die beiden Platten voneinander abgehoben und können leicht gegeneinander verschoben werden.

Bei einer solchen Ausführungsform eines Lochschiebers ist es vorteilhaft, wenn an beiden in Verschieberichtung der verschiebbaren Platte voneinander distanzierten Enden derselben je ein, vorzugsweise mittels Federkraft in Kontakt mit der Platte gehaltener Arm angreift. Dadurch wird erreicht, daß je nach der gewünschten Verschieberichtung die verstellbare Platte an unterschiedlichen Enden abgehoben wird und somit Verkrustungen aufgebrochen werden.

Bei einer besonders bevorzugten Ausführungsform ist vorgesehen, daß die Arme Schenkel eines Winkels sind, wobei die Achse den Verbindungsbereich der beiden Schenkel durchsetzt und ggf. eine Feder vorgesehen ist, welche die verschiebbare Platte gegen die Achse zieht. Dabei ist es besonders vorteilhaft, wenn jeder durch einen Arm gebildete Mitnehmer starr mit einem Hebel verbunden ist, der seinerseits mit einem Anker eines impulsweise ansteuerbaren Elektromagneten verbunden ist. Auf diese Weise wird sichergestellt, daß die verschiebbare Platte stets an ihren beiden Enden abgehoben wird.

Um die Sicherheit des Abhebens der verschiebbaren Platte von der feststehenden Platte zu erhöhen, ist es zweckmäßig, wenn die freien Enden der als Arme ausgebildeten Mitnehmer mit einem Reibbelag versehen sind und ggf. auch den Bereich der verschiebbaren Platte, an welcher die Arme anliegen, mit einem Reibbelag versehen sind.

Eine weitere Möglichkeit der Ausbildung eines erfindungsgemäßen Lochschiebers besteht darin, daß mindestens ein Mitnehmer durch einen Winkelhebel gebildet ist, der im Verbindungsbereich seiner beiden Schenkel von der senkrecht zur Bewegungsrichtung der verschiebbaren Platte und parallel zu dieser verlaufenden Achse durchsetzt und mit einem von einem Impulszug erregbaren Stellantrieb mit Drehimpulsen beaufschlagbar ist. Dadurch ist sichergestellt, daß bei jedem Drehimpuls die verschiebbare Platte von der feststehenden abgehoben und dabei gleichzeitig aufgrund der Reibung zwischen der Platte und dem daran anliegenden freien Ende des Schenkels des Winkelhebels ein Stück in Drehrichtung des Winkelhebels mitgenommen wird, wobei in der Impulspause der Winkelhebel aufgrund der Anpressung der beiden Platten des Lochschiebers in seine Ausgangslage zurückkehrt. Auf diese Weise kommt es bei jedem kurzen Drehimpuls des Winkelhebels zu einer kleinen Verschiebung der verschiebbaren Platte, die somit bei ihrer Verschiebung im Rhythmus der Drehimpulse vibriert, wodurch allenfalls vorhandene Verkrustungen aufgebrochen werden.

In weiterer Ausgestaltung der Erfindung kann mindestens ein Mitnehmer durch einen um die parallel zur verschiebbaren Platte und senkrecht zu deren Bewegungsrichtung verlaufenden Welle in Drehung versetzbaren Arme oder eine Nokke gebildet sein, wobei der Abstand zwischen der dieser Welle und der der feststehenden Platte, zugekehrten Seite der verschiebbaren Platte oder eines an dieser angeordneten Ansatzes kleiner ist als der Radius des Kreises, den das freie Ende des Armes bzw. der Nocke beschreibt. Dabei erfolgt die Verschiebung der verschiebbaren Platte ebenfalls in kleinen Schritten und es kommt daher praktisch zum Vibrieren der verschiebbaren Platte und somit zum Aufbrechen von Verkrustungen.

Die Erfindung wird nachfolgend anhand der Zeichnung näher erläutert. Es zeigt

Fig. 1 schematisch eine erste Ausführungsform eines erfindungsgemäßen Lochschiebers,

Fig. 2 bis 4 eine weitere Ausführungsform, wobei in Fig. 4 Teile der verschiebbaren Platte weggebrochen sind,

Fig. 5 bis 7 schematisch eine weitere Ausführungsform in verschiedenen Betriebszuständen,

Fig. 8 und 9 eine gegenüber der Ausführungsform gemäß der Fig. 5 bis 7 abgewandelte Ausführungsform, und

Fig. 10 schematisch ein Beispiel für die Ansteuerung eines erfindungsgemäßen Lochschiebers.

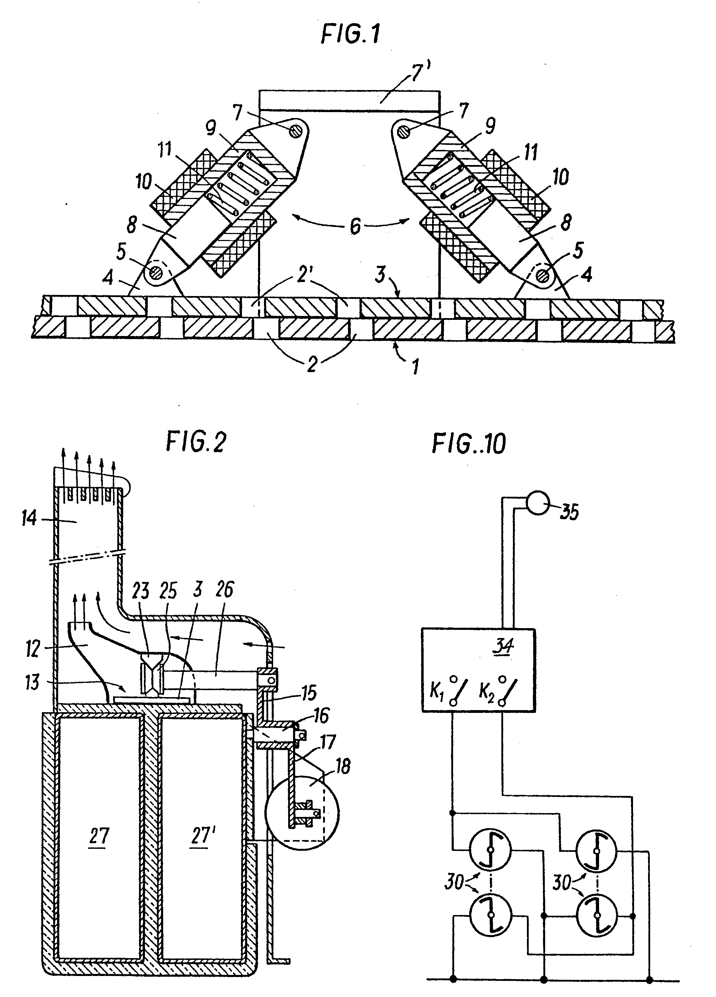

Bei der Ausführungsform gemäß Fig. 1 ist in üblicher Weise eine feststehende mit Durchbrüchen 2 versehene Platte 1 und eine ebenfalls mit Durchbrüchen 2' versehene auf dieser in deren Längsrichtung verschiebbaren Platte 3 vorgesehen. An dieser verschiebbaren Platte 3 sind Lageraugen 4 angeformt, welche Achsen 5 aufnehmen, an denen Betätigungselemente 6 angreifen, die ihrerseits an parallel zur Ebene der Platten 1 und 3 senkrecht zur Bewegungsrichtung der Platte 3 verlaufenden, an einem Träger 7' ortsfesten Achsen 7 abgestützt sind.

Diese Betätigungselemente 6 schließen einen spitzen Winkel mit der verschiebbaren Platte 3 ein und sind im wesentlichen durch einen Anker 8, der über sein Lagerauge mit der verschiebbaren Platte 3 verbunden ist, ein Gehäuse 9, in welchem der durch die Feder 11 belastete Anker 8 verschiebbar ist und eine Erregerspule 10 gebildet, die praktisch einen integrierten Stellantrieb darstellt.

Wird die Erregerspule 10 eines der beiden Betätigungselemente 6 impulsweise erregt, so wird dessen Anker 8 impulsweise gegen die Kraft der Feder 11 angezogen, wobei die verschiebbare Platte 3 von der festen Platte 1 im Bereich des aktivierten Betätigungselementes 6 angehoben wird. Nach dem Ende eines jeden Impulses drückt die Feder 11 den Anker 8 wieder nach außen, so daß die Platte 3 wieder gegen die Platte 1 gedrückt wird. Aufgrund des spitzen Winkels, den das Betätigungselement 6 mit der Platte 3 einschließt, kommt es während der durch die impulsweise Erregung der Erregerspule 10 eines Betätigungselementes 6 und der damit verbundenen Vibration der verschiebbaren Platte 3 zu einer Relativbewegung der beiden Platten 1 und 3, wobei sich die letztere im Sinne einer Verlängerung des impulsweise erregten Betätigungselementes 6 bewegt.

Dabei werden durch die Vibration der Platte 3 auch allfällige Verkrustungen aufgebrochen und dadurch eine leichte Verschiebbarkeit sichergestellt. Um letztere noch weiter zu erleichtern, kann während der Dauer der impulsweisen Erregung des einen Betätigungselementes 6 die Erregerspule 10 des zweiten Betätigungselementes 6 mit einem Dauersignal erregt sein, wodurch das zweite Ende der Platte 3 von der Platte 1 abgehoben bleibt.

Fig. 2 zeigt einen Schnitt durch einen Teil einer Klimaanlage, wie sie häufig für die Klimatisierung von Fahrzeugabteilen, z. B. Zugsabteilen, verwendet wird. Dabei sind mit 27 und 27' zwei Kanäle zur Zufuhr von konditionierter Luft mit unterschiedlichen Temperaturen und mit 12 eine Leiteinrichtung bezeichnet, welche von der aus den Kanälen 27, 27' über den Lochschieber 13 austretenden Luft durchströmt ist, welche danach in einen mit Öffnungen versehenen Ausströmkanal 14 eintritt.

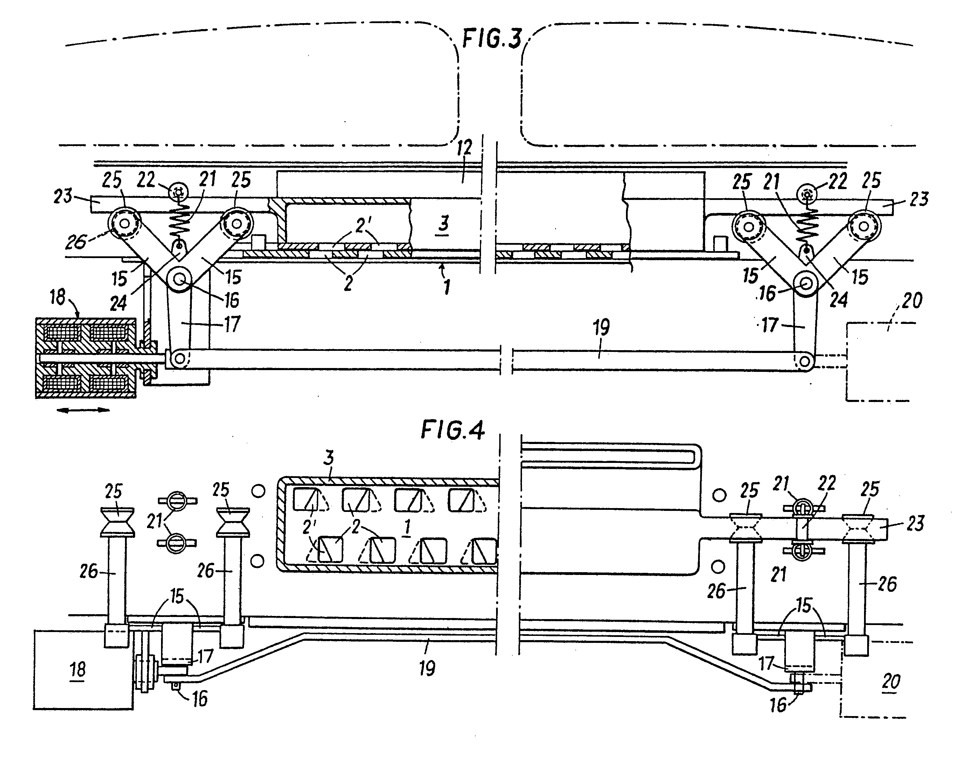

Die Betätigungselemente 6 des Lochschiebers 13 sind gemäß den Fig. 2 bis 4 je durch zwei Arme 15 gebildet, die miteinander starr verbunden und um eine parallel zur Ebene der verschiebbaren Platte 3 und senkrecht zu deren Bewegungsrichtung verlaufenden Achsen 16 schwenkbar angeordnet sind. Weiters sind die Arme 15 mit seinem Hebel 17 verbunden, der seinerseits mit dem durch einen zweiseitig wirkenden Elektromagneten 18 direkt oder über eine Verbindungsstange 19 verbunden ist, wobei die letztere an ihrem zweiten Ende in einer Führung 20 geführt ist.

Die Anpressung der verschiebbaren Platte 3 an die Platte 1 erfolgt mittels Federn 21 und Rollen 22, wobei die Rollen 22 an die Oberseite von Auslegern 23 der Platte 3 angepreßt werden und die Federn 21 in Augen 24 eingehängt sind.

Die Ausleger 23 weisen einen dreieckigen Querschnitt auf und sind auf Rollen 25 abgestützt, die an mit den freien Enden der Arme 15 verbundenen Achsen 26 angeordnet sind.

Bei der Ausführungsform gemäß den Fig. 2 bis 4 sind verschiedene Abwandlungen möglich; so kann auf die Verbindungsstange 19 verzichtet werden, wenn statt der Führung 20 ein weiterer zweiseitig wirkender Elektromagnet 18 vorgesehen wird, der mit dem Hebel 17 des zweiten Paares von Armen 15 verbunden ist.

Eine weitere mögliche Abwandlung besteht auch darin, daß statt des doppeltwirkenden Elektromagneten 18, der zwei voneinander distanzierte Erregerspulen aufweist, zwei einseitig wirkende Elektromagnete vorgesehen werden, die an den Hebeln 17 angreifen, die über ein Seil oder eine Verbindungsstange 19 miteinander verbunden sind.

Die Wirkungsweise ist folgende. Wird der Elektromagnet 18 erregt, so werden die Hebel 17 verschwenkt und damit auch die mit dieser verbundenen Paare von Armen 15. Da die von der Achse 16 aus gehende radiale Erstreckung der Arme 15 größer ist als der Normalabstand der Achse 16 von der Unterseite des Auslegers 23 der verschiebbaren Platte 3, wird die letztere entgegen der Kraft der Federn 21 von der festen Platte 1 abgehoben und bedingt durch die Reibung zwischen den Armen 15 und den Auslegern 23 der Platte 3, verschoben, wobei die federbelastete Rolle 22 abrollt. Nach Beendigung der Erregung des Elektromagneten 18 bzw. nach dem Ende eines jeden Erregungsimpulses wird die gegen die Platte 1 verschobene Platte 3 durch die Federn 21 wieder gegen die feste Platte 1 gedrückt, wodurch die Arme 15 wieder in ihre Ausgangsstellung gelangen und ein Verstellschritt abgeschlossen ist.

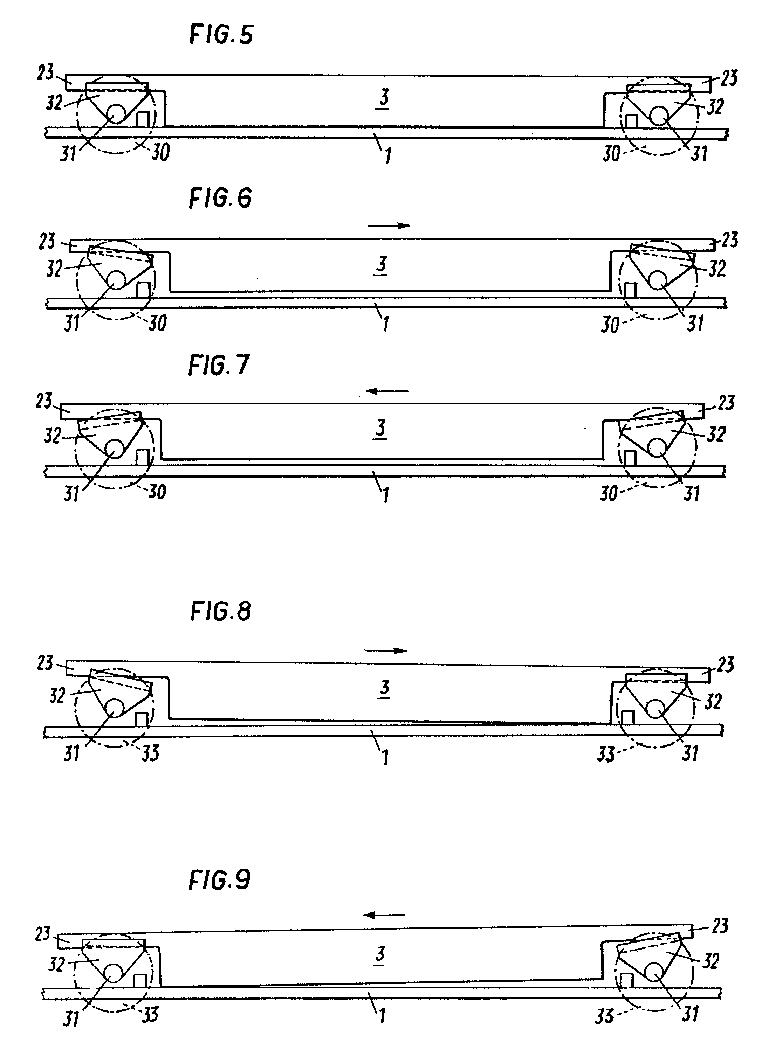

Eine weitere Ausführungsform eines erfindungsgemäßen Lochschiebers ist schematisch in den Fig. 5 bis 7 dargestellt. Bei dieser Ausführungsform sind Drehmagnete 30 vorgesehen, welche auf Wellen 31 einwirken, die mit Nocken 32 drehfest verbunden sind. Diese weisen eine Abflachung auf, die in Ruhestellung etwa parallel zur Unterseite des zugeordneten Auslegers 23 der verschiebbaren Platte 3 liegen, die über nicht dargestellte Federn gegen die feste Platte 1 gedrückt wird. Bei dieser Ausführungsform sind in beiden Drehrichtungen wirkende Drehmagnete vorgesehen.

Werden die beiden Drehmagnete 30 gleichzeitig impulsweise erregt, so wird die verschiebbare Platte 3 bei jedem Impuls durch die Drehbewegung der Drehmagnete 30 gegen die Kraft der nicht dargestellten Federn angehoben und durch die Reibung zwischen den Nocken 32 und den Auslegern 23 ein Stück gegen die feste Platte 1 verschoben. Nach Beendigung eines jeden Erregungsimpulses senkt sich die Platte 3 unter dem Einfluß der nicht dargestellten Federn wieder auf die Platte 1 ab, wobei die Nocken 32 wieder in ihre Ausgangslagen zurückkehren.

Je nach Erregung der Drehmagnete 30 kommt es daher zu einer Bewegung der Platte 3 gegenüber der Platte 1 in der einen oder anderen Richtung.

Bei der Ausführungsform gemäß der Fig. 8 und 9 sind statt der in beiden Drehrichtungen wirkenden Drehmagnete nur in einer Drehrichtung wirkende Drehmagnete 33 vorgesehen, welche die mit Nocken 32 versehenen Wellen 31 antreiben. Dabei wird jeweils nur ein Drehmagnet 33 erregt, wobei die Platte 3 im Bereich des erregten Drehmagneten angehoben und durch die Drehbwegung der Nocken 32 aufgrund der Reibung mitgenommen wird. Je nachdem welcher der beiden in einander entgegengesetzten Drehrichtungen wirkenden Drehmagnete 33 erregt wird, kommt es zu einer Verschiebung der Platte 3 in der einen oder anderen Richtung.

Auch bei der Ausführungsform gemäß den Fig. 8 und 9 wird die Platte 3 mittels nicht dargestellter Federn gegen die Platte 1 gepreßt.

In Fig. 10 ist schematisch ein Beispiel einer Ansteuerung eines erfindungsgemäßen Lochschiebers im Rahmen einer Klimaanlage dargestellt. Dabei ist ein Raumthermostat 34 vorgesehen, der die von einem Temperaturfühler 35 kommenden Signale verarbeitet bzw. mit einem vorgegebenen Sollwert vergleicht. Je nachdem ob die vom Temperaturfühler 35 kommenden Signale unter oder über dem vorgegebenen Wert liegen, schließt einer der beiden Schalter K1 oder K2, wodurch die beiden in beiden Drehrichtungen wirkenden Drehmagnete 30 bzw. deren eine der entsprechenden Drehrichtung zugeordneten Wicklungen erregt werden. Hierbei werden die Wicklungen der Drehmagnete jedoch nicht mit konstantem Strom erregt, sondern impulsweise bis die Raumtemperatur der Solltemperatur ggf. unter Berücksichtigung der thermischen Verzögerung des Systems entspricht, wobei die Impulsdauer mit größerwerdender Annäherung an den Sollwert kürzer wird und eine Mindestdauer vorgesehen ist.

Selbstverständlich kann eine derartige Steuerung auch für Ausführungsformen mit Elektromagneten gewählt werden.

**Patentansprüche**

1. Lochschieber, insbesondere für Luftheizungen, welcher im wesentlichen zwei aneinanderliegende und ggf. durch Federkraft gegeneinander gepreßte gelochte Platten (1, 3) aufweist, die relativ zueinander über Mitnehmer (4, 15, 32) mittels eines Stellantriebes (6; 18, 20; 30, 33) verschiebbar sind, dadurch gekennzeichnet, daß der Stellantrieb (6; 18, 20; 30, 33) über die Mitnehmer (4, 15, 32) jeweils in einem spitzen Winkel zu einer der Platten (3) angreift und impulsweise erregbar ist, so daß diese Platte (3) bei jedem Impuls kurz von der anderen Platte (1) abgehoben und dabei gleichzeitig in Verschieberichtung bewegt wird.

2. Lochschieber nach Anspruch 1, dadurch gekennzeichnet, daß zwei an der verschiebbaren Platte (3) an in Verschieberichtung distanzierten Punkten angelenkte und mit dieser je einen spitzen Winkel einschließende als Stellantrieb wirkende Betätigungselemente (6) vorgesehen sind, die je aus einem mittels Federn (11) vorgespannten Anker (8) und einem zugehörigen Kern (9) eines mittels eines Impulszuges erregbaren Elektromagneten bestehen.

3. Lochschieber nach Anspruch 1, dadurch gekennzeichnet, daß die Mitnehmer durch mindestens zwei Arme (15) gebildet sind, die mit ihren einen Enden an der der feststehenden Platte (1) des Lochschiebers zugekehrten Seite der verschiebbaren Platte (3) oder eines mit dieser verbundenen Auslegers (23) anliegen und an ihren anderen Enden schwenkbar an der senkrecht zur Bewegungsrichtung der verschiebbaren Platte (3) und parallel zu dieser verlaufenden Achse (16) befestigt sind, wobei in der gleichen Bewegungsrichtung der verschiebbaren Platte (3) gesehen, der Anlagepunkt mindestens eines der Arme (15) vor und jener bzw. jene des bzw. der übrigen Arme(s) (15) hinter der zugeordneten Achse (16) liegt bzw. liegen, an der bzw. denen die Arme (15) jeweils befestigt sind.

4. Lochschieber nach Anspruch 3, dadurch gekennzeichnet, daß an beiden in Verschieberichtung der verschiebbaren Platte (3) voneinander distanzierten Enden derselben je ein, vorzugsweise mittels Federkraft in Kontakt mit der Platte (3) gehaltener Arm (15) angreift.

5. Lochschieber nach Anspruch 3, dadurch gekennzeichnet, daß die Arme (15) Schenkel eines Winkels sind, und die senkrecht zur Bewegungsrichtung der verschiebbaren Platte (3) und parallel zu dieser verlaufenden Achse (16) den Verbindungsbereich der beiden Schenkel durchsetzt und ggf. eine Feder (21) vorgesehen ist, die die verschiebbare Platte (3) gegen die Achse (16) zieht.

6. Lochschieber nach einem der Ansprüche 1, 3 bis 5, dadurch gekennzeichnet, daß jeder durch einen Arm (15) gebildete Mitnehmer starr mit einem Hebel (17) verbunden ist, der seinerseits mit einem Anker eines impulsweise ansteuerbaren Elektromagneten (18) verbunden ist.

7. Lochschieber nach einem der Ansprüche 1, 3 bis 6, dadurch gekennzeichnet, daß die freien Enden der als Arme (15) ausgebildeten Mitnehmer mit einem Reibbelag versehen sind.

8. Lochschieber nach einem der Ansprüche 1, 3 bis 7, dadurch gekennzeichnet, daß die verschiebbare Platte (3) in jenen Bereichen, in denen die als Arme (15) ausgebildeten Mitnehmer an der verschiebbaren Platte (3) anliegen, mit einem Reibbelag versehen ist.

9. Lochschieber nach Anspruch 1, dadurch gekennzeichnet, daß mindestens ein Mitnehmer durch einen Winkelhebel gebildet ist, der im Verbindungsbereich seiner beiden Schenkeln von der senkrecht zur Bewegungsrichtung der verschiebbaren Platte (3) und parallel zu dieser verlaufenden Achse durchsetzt und von einem von einem Impulszug erregbaren Stellantrieb mit Drehimpulsen beaufschlagbar ist.

10. Lochschieber nach Anspruch 1, dadurch gekennzeichnet, daß mindestens ein Mitnehmer durch einen um die parallel zur verschiebbaren Platte (3) und senkrecht zu deren Bewegungsrichtung verlaufenden Welle (31) in Drehung versetzbaren Arm oder eine Nocke (32) gebildet ist, wobei der Abstand zwischen der dieser Welle (31) und der der feststehenden Platte (1) zugekehrten Seite der verschiebbaren Platte (3) oder eines an dieser angeordneten Ansatzes kleiner ist als der Radius des Kreises, den das freie Ende des Armes bzw. der Nocke (32) beschreibt.

**Claims**

1. A perforated register, in particular for hot air heating, essentially comprising two adjacent perforated plates (1, 3) which may be pressed against each other by the force of springs, one of which plates may be slid along the other by means of an actuating mechanism (6; 18, 20; 30, 33) using linking elements (4, 15, 32) wherein said actuating mechanism (6; 18, 20; 30, 33) is acting on one of said plates (3) via said linking elements (4, 15, 32) at an acute angle, andend is subject to an actuating pulse such that said plate (3) is temporarily lifted from the other plate (1) upon each pulse, and is slid in the direction of motion at the same time.

2. A perforated register according to claim 1, wherein the actuating mechanism comprises two actuator elements (6) which are hinged to the sliding plate (3) at two points separated by a certain distance in the direction of motion, and are each forming an acute angle with said plate (3), each of said elements (6) consisting of an armature (8) pro-loaded by springs (11) and a corresponding core (9) of a solenoid which may be excited by a pulse train.

3. A perforated register according to claim 1, wherein the linking elements comprise two or more arms (15) whose one ends are in contact with the face of the sliding plate (3) adjacent to the fixed plate (1) of the perforated register or a bracket (23) connected thereto, and whose other ends are pivot-mounted on the shaft (16) running normal to the direction of motion of said sliding plate (3) and parallel to said plate; the point of contact of at least one of said arms (15) — as seen in the same direction of motion of the sliding plate (3) — being situated in front of the respective shaft (16), and the point(s) of contact of the other arm(s) (15) behind the respective shaft (16) carrying said arms (15).

4. A perforated register according to claim 3, wherein an arm (15) is acting on each of the two ends of the sliding plate (3) which are located at a distance of each other in the direction of motion of said plate, which arm (15) is pressed against the latter, preferably by the force of springs.

5. A perforated register according to claim 3, wherein the arms (15) form the legs of an angle, and wherein the shaft (16) running normal to the direction of motion of the sliding plate (3) and parallel to said plate passes through the area where the two legs of the angle meet, and wherein may be provided a spring (21) which will pull the sliding plate (3) towards said shaft (16).

6. A perforated register according to any of claims 1, 3—5, wherein each linking element formed by an arm (15) is rigidly connected to a lever (17) which in turn is connected to an armature of a pulse-excited solenoid (18).

7. A perforated register according to any of claims 1, 3—6, wherein the free ends of the linking elements configured as arms (15) are provided with a friction lining.

8. A perforated register according to any of claims 1, 3—7, wherein the sliding plate (3) has a friction lining in those areas in which the linking elements configured as arms (15) are in contact with said sliding plate (3).

9. A perforated register according to claim 1, wherein at least one linking element is configured as a knee-lever which, in the area of its knee, is traversed by the shaft running normal to the direction of motion of the sliding plate (3) and parallel to said plate, and to which a torque may be applied by means of an actuating mechanism excited by a pulse train.

10. A perforated register according to claim 1, wherein at least one linking element is formed by an arm or a cam (32) that is rotatable around the shaft (31) running parallel to the sliding plate (3) and normal to the direction of motion of said plate, the distance between the surface of said sliding plate (3), or a projection therefrom, facing the said shaft (31) and that facing the fixed plate (1) being smaller than the radius of the circle described by the free end of said arm or cam (32).

## Revendications

1. Registre perforé, notamment pour chauffages à air chaud, comportant essentiellement deux plaques (1, 3) perforées appliquées l'une contre l'autre et eventuellement pressées l'une contre l'autre par une force de ressort, que peuvent être déplacées l'une par rapport à l'autre par l'intermédiaire d'organes d'entrainement (4, 15, 32), au moyen d'une organ correcteur, caractérisé en ce que l'organe correcteur (6; 18, 10; 30, 33) agit par les organes d'entrainement (4, 15, 32), chacun dans un angle aigu à une des plaques, (3) et est excitable par impulsions, de facon qu'à chaque impulsion cette plaque (3) est soulevée peu de temps avant l'autre plaque (1) et en même temps est mue dans la direction du déplacement.

2. Registre perforé selon la revendication 1, caractérisé en ce que sont prévus deux organes d'entrainement articulés sur la plaque coulissante (3) à des points qui sont à une distance l'un de l'autre en direction du déplacement, chacun formant avec la plaque coulissante un angle aigu, ces organes d'entrainement opérant comme organes correcteurs (6) et chacun d'eux consistant d'une armature d'aimant (8), précontrainte au moyen de ressorts (11), et d'un noyau correspondant (9) d'un électro-aimant excitable au moyen d'un train d'impulsions.

3. Registre perforé selon la revendication 1, caractérisé en ce que l'organe d'entrainement est formé par au moins deux bras (15) qui s'appliquent par une de leurs extrémités sur la face de la plaque coulissante (3), ou d'un avant-bras (23) relié à celle-ci, qui est située en regard de la plaque fixe (1) du registre perforé, ces bras étant, à leurs autres extrémités, fixés, de façon à pouvoir pivoter, sur l'axe (16) s'étendant perpendiculairement à la direction de déplacement de la plaque coulissante (3) et parallèlement à celle-ci, tandis que, vu dans la même direction de déplacement de la plaque coulissante (3), le point d'appui d'au moins l'un des bras (15) se situé à l'avant et celui ou ceux du ou des autres (15) se situe, ou se situent, à l'arrière de l'axe associé (16), axe ou axes auquel ou auxquels les bras (15) sont chacun fixés.

4. Registre perforé selon la revendication 3, caractérisé en ce que sur chacune des deux extrémités de la plaque coulissante (3) qui sont éloignées l'une de l'autre dans la direction de déplacement de celle-ci, agit un bras (15), maintenu, de préférence par un effet de ressort, en contact avec la plaque (3).

5. Registre perforé selon la revendication 3, caractérisé en ce que les bras (15) forment des côtés d'un angle, et l'axe (16) s'étendant perpendiculairement à la direction de déplacement de la plaque coulissante (3) et parallèlement à celle-ci traverse la zone de jonction des deux côtés, un ressort (21) étant éventuellement prévu pour tirer la plaque coulissante (3) contre l'axe (16).

6. Registre perforé selon l'une des revendications 1, 3 à 5, caractérisé en ce que chaque organe d'entrainement formé par un bras (15) est relié rigidement à un levier (17), qui est relié de son côté à une armature d'un électro-aimant (18) excités par impulsions.

7. Registre perforé selon l'une des revendications 1, 3 à 6, caractérisé en ce que les extrémités libres des organes d'entrainement constitués sous forme de bras (15) sont munies d'une garniture de friction.

8. Registre perforé selon l'une des revendications 1, 3 à 7, caractérisé en ce que la plaque coulissante (3) est munie d'une garniture de friction dans les zones où les organes d'entrainement constitués sous forme de bras (15) s'appuient sur la plaque déplaçable (3).

9. Registre perforé selon la revendication 1, caractérisé en ce qu'au moins un organe d'entrainement est formé par un levier coudé, qui dans la zone de jonction de ses deux branches est traversé par l'axe s'étendant perpendiculairement à la direction de déplacement de la plaque coulissante (3) et parallèlement à celle-ci et peut être soumis à l'action d'impulsions de rotations angulaires par un organe correcteur excitée par un train d'impulsions.

10. Registre perforé selon la revendication 1, caractérisé en ce qu'au moins un organe d'etrainement est formé d'un bras qui peut être mis en rotation par un arbre (31) s'étendant parallèlement au plan de la plaque coulissante (3) et transversalement à la direction de son déplacement, ou d'une came (32); la distance entre le côté de la plaque coulissante (3), ou d'une saillie disposée à celle-ci, face à l'arbre (31) et le côté de cette plaque face à la plaque fixe (1) étant plus petite que le rayon du cercle décrit par le baut libre du bras ou de la came (32).

FIG.1

FIG.2

FIG..10

FIG.3

FIG.4

0 058 147

FIG. 5

FIG. 6

FIG. 7

FIG. 8

FIG. 9